# EUROPEAN PATENT SPECIFICATION

(11) **EP 3 878 321 B1**
(45) Date of publication and mention of the grant of the patent: **27.11.2024**
(21) Application number: 21160189.3
(22) Date of filing: 02.03.2021
(51) Int. Cl.: A47J 31/40, A47J 31/44

(54) **SYSTEM COMPRISING AN ALUMINUM CAPSULE AND A CAPSULE MACHINE FOR THE PREPARATION OF A BEVERAGE AND OPERATING METHOD OF THE CAPSULE MACHINE**
SYSTEM AUS EINER ALUMINIUMKAPSEL UND EINER KAPSELMASCHINE ZUR ZUBEREITUNG EINES GETRÄNKS UND BETRIEBSVERFAHREN DER KAPSELMASCHINE
SYSTÈME COMPRENANT UNE CAPSULE EN ALUMINIUM ET UNE MACHINE À CAPSULE POUR LA PRÉPARATION D'UNE BOISSON ET PROCÉDÉ DE FONCTIONNEMENT DE LA MACHINE À CAPSULE

(30) Priority: 12.03.2020 IT 202000005362
(43) Date of publication of application: 15.09.2021
(73) Proprietor: BIALETTI INDUSTRIE S.P.A., 25030 Coccaglio (Brescia) (IT)
(72) Inventor: BALZANI, Moreno, 25030 Coccaglio, Brescia (IT)
(74) Representative: Pulieri, Gianluca Antonio

(56) References cited:
- WO-A1-2011/000724
- WO-A1-2015/091017
- US-A1- 2019 291 947

## Description

The present invention relates to a machine for preparing a beverage from capsules containing a product, e.g., an infusion product, such as coffee powder or tea, or a soluble product.

As known, the capsule machines for the preparation of beverages have become very popular in recent years, by virtue of the great ease of use and the availability of a wide range of products, such as coffee, tea, herbal teas, and the like.

Generally, when a capsule is inserted into a machine for the preparation of the beverage, the machine, either automatically or after a special command, starts a beverage preparation cycle, which provides a predefined time for the delivery of hot or cold water to the capsule and, sometimes, the waiting time for the boiler resistor to reach a predetermined temperature.

However, the need is often present to differentiate the preparation cycle of the beverage according to the type of beverage itself, e.g., differentiating between the preparation of an infused beverage or a soluble beverage, or between a preparation with hot water and one with cold water, or even between coffee and tea or herbal tea. WO 2011/000724 A1 discloses a system to differentiate the preparation cycle of the beverage according to the type of beverage depending on the type of capsule inserted in the beverage machine by the user.

The object of the present invention is to satisfy such a need. Such an object is achieved by a system according to claim 1 comprising an aluminum capsule and a capsule machine and a method for operating a capsule machine according to claim 6, dependent claims describe further advantageous embodiments.

The features and advantages of the machine according to the present invention will be apparent from the following description, given by way of non-limiting example, according to the accompanying figures, in which:

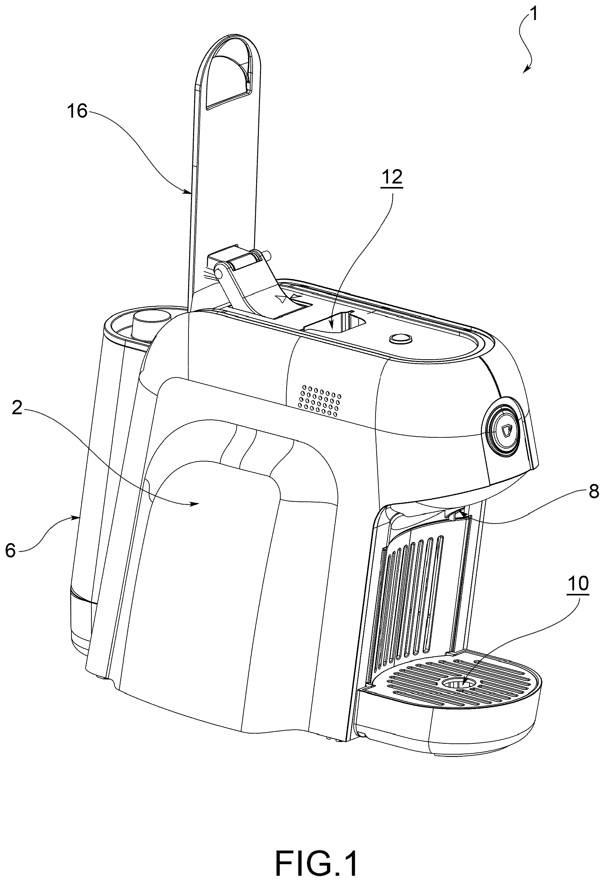

- figure 1 shows a capsule machine for preparing a beverage according to an embodiment of the present invention;

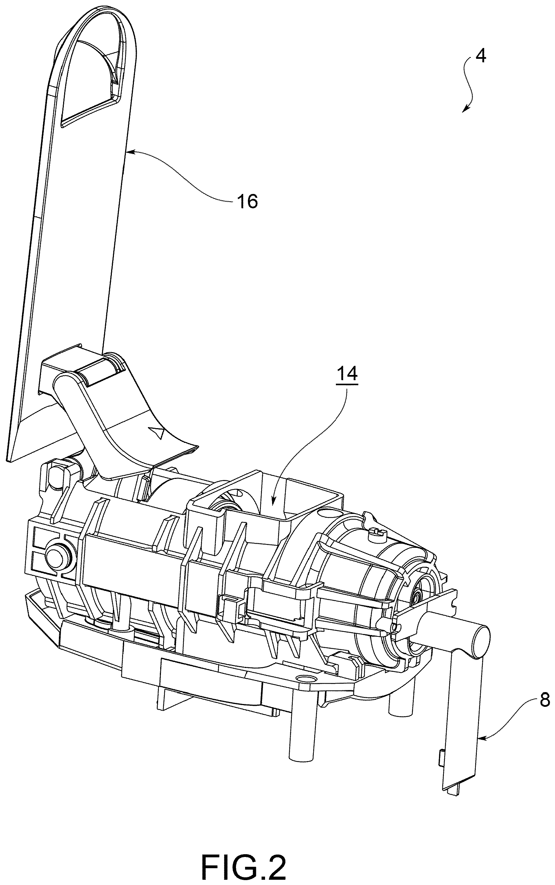

- figure 2 shows an infusion assembly of the machine in figure 1;
- figure 3 shows the infusion assembly partially in section, in an initial operating configuration;
- figure 4 shows a side view of the infusion assembly in figure 3;
- figure 5 shows a side view of the infusion assembly in an inserted capsule configuration.

With reference to the accompanying figures, a capsule machine for preparing a beverage, by infusion or solubilization, with hot or cold water, e.g., coffee, tea, herbal tea, and the like, according to an embodiment of the present invention, is referred to by reference numeral 1 as a whole.

The machine 1 comprises an outer casing 2, in which an assembly 4 is arranged provided with a dispensing pipe 8 for dispensing the beverage into a container, e.g., a cup, usually arranged in a dispensing region 10 of the machine 1.

The machine 1 further comprises a water tank 6, a pump for drawing a predetermined amount of water from the water tank 6, a boiler for heating the amount of water fed by the pump, and machine management means for electronically managing the pump, the boiler and, in one embodiment, the assembly.

A capsule containing a product for infusion or solubilization, e.g., powdered coffee or crushed tea or herbal tea leaves, is inserted into the machine 1 through a compartment opening 12, e.g., appropriately shaped to accommodate a predetermined type of capsule.

Through the compartment opening 12, the capsule is housed in a capsule compartment 14 of the assembly 4.

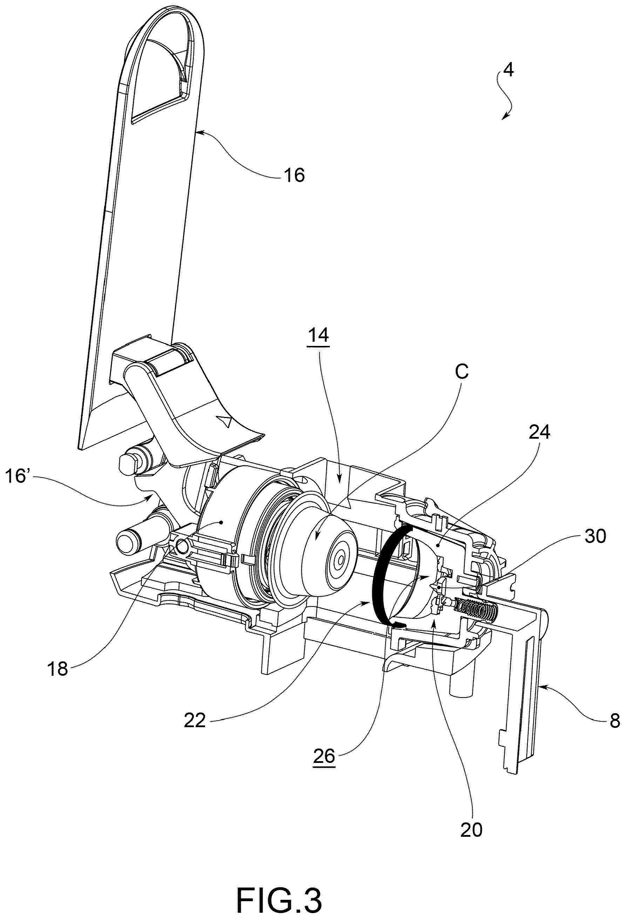

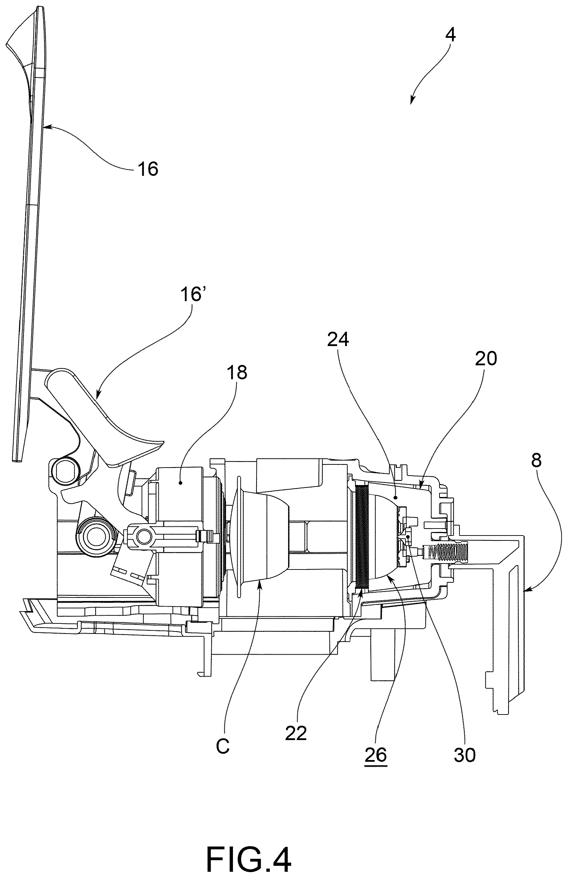

In an initial configuration, the capsule C is arranged between a movable piston 18 and a fixed capsule seat 20, outside said capsule housing 20 (figures 3 and 4) .

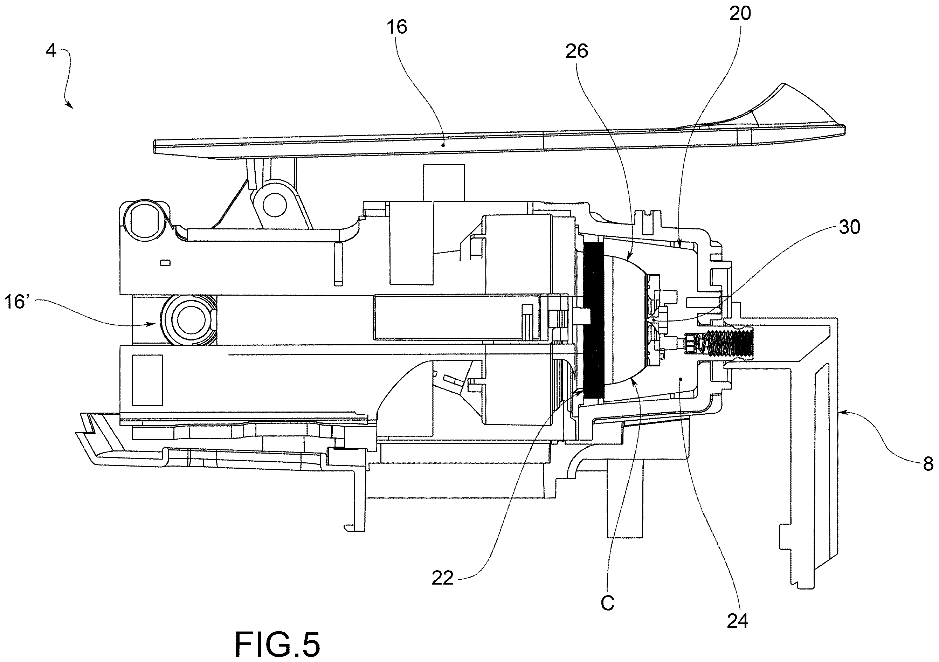

By manual actuation, e.g., by lowering a lever 16 of the assembly 4, or by means of electric actuation controlled by a start button, the piston 18 advances towards the capsule seat 20 and pushes the capsule C into said capsule housing 20 (figure 5).

According to the invention, the machine 1 is provided with recognition means adapted to recognize a capsule made of metal material, and in particular of aluminum.

In the scope of the present invention, the term "aluminum capsule" means a capsule comprising a hollow body for containing an infusion product, formed by an annular side wall, a bottom, which closes one end of the hollow body, and a flange radially protruding externally from the side wall, located at the end opposite to that of the bottom, made entirely made of aluminum, and a lid, e.g., made of a multilayer film, attached to the flange of the body to close it.

Similarly, the term "plastic capsule" means a capsule for which the hollow body is made entirely of plastic material.

In particular, the recognition means preferably comprise a conductor wire winding 22, integrated into the capsule seat 20. For example, the capsule seat 20 comprises an annular wall 24, which encloses a seat compartment 26, preferably shaped, adapted to accommodate the capsule C, and the winding 22 is wound on the outside of the wall 24.

The recognition means further comprise a power supply device adapted to electrically power the winding 22, and electronic detection management means operatively connected to the winding 22 to detect a change in the magnetic field generated by the winding 22.

When the seat compartment 26 is empty, i.e., free from a capsule, the electronic detection management means detect a predetermined magnetic field generated by the winding 22.

If the capsule C housed in the compartment seat 26 of the capsule seat 20 is made of a metal material, and in particular of aluminum, the electronic detection management means detect a variation of the magnetic field characteristic of the metal material and send a metal material recognition signal to the machine management means.

According to an example of the use of the machine covered by the scope of the present invention defined by the appended claims, provided that the capsules made of an aluminum material, contain powdered coffee, when the machine management means receive the metal material recognition signal, they start a first beverage preparation cycle, e.g. particularly suitable for the preparation of coffee, characterized by a predefined duration of the supply of hot water to the capsule seat 20 or by a predefined temperature of the hot water to be supplied to the capsule seat 5.

According to another embodiment not covered by the scope of the invention defined by the appended claims, in the absence of the metal material recognition signal, the machine management means start a second beverage preparation cycle, e.g., particularly suitable for the preparation of tea or herbal tea, characterized by a predefined duration of the hot water supply to the capsule seat 20 or by a predefined temperature of the hot water to be supplied to the capsule seat 5. According to the present invention, in the absence of the metal material recognition signal, the machine management means do not start any beverage preparation cycle.

For example, in presence of the metal material recognition signal, the coffee preparation cycle comprises the introduction of pressurized hot water into the capsule, through its lid, for the predetermined time; the pressure of the water inside the capsule causes the bottom of the capsule to swell, so that, by abutting and pressing against pointed means 30 of the capsule seat 20, arranged in the seat compartment 26, said bottom tears and allows the infused beverage to flow out and be channeled towards the delivery pipe 8.

If the capsule C housed in the seat compartment 26 of the capsule seat 20 is made of plastic material, the detection means do not detect any change in the magnetic field or they detect a characteristic change of the plastic material and either do not send any metal material detection signal to the machine management means or send a plastic material detection signal; consequently, the machine management means either start a typical preparation cycle for the preparation of tea or herbal tea or they do not start any preparation cycle.

Innovatively, the machine according to the present invention makes it possible to enable or inhibit the beverage preparation cycles according to the type of capsule: capsule made of aluminum material, or capsule made of plastic material or any other metal material.

Advantageously, moreover, in the embodiment in which the machine management means do not initiate any preparation cycle in the presence of a plastic material recognition signal (or in the absence of a metal material recognition signal), the machine according to the invention solves a problem of environmental sustainability.

Indeed, millions of capsules, made both of aluminum and plastic, are produced every year. In either case, the disposal of the spent capsule
is a problem now felt by most consumers.

In this context, capsules made of aluminum, although needing to be separately disposed of, like the plastic ones, are perceived as more respectful of environmental issues, because aluminum can be recycled countless times without degrading. On the contrary, plastic, even if correctly disposed of, is perceived as a polluting material and there is now a widespread tendency to limit its use, especially for single-use items.

According to the present invention, in case of the use of capsules made of plastic material, the machine "does not work", that is, it does not start the preparation cycle and does not dispense the beverage. Such a machine helps to limit the use of plastic capsules because they are not suitable for the operation of the machine itself.

The aforesaid description refers to a type of machine for illustrative purposes only.

According to a variant of the invention, the machine operates with open capsules, whereby the assembly injects pressurized water into the capsule through the lid and the beverage flows out of the bottom already provided with open dispensing holes. In other words, no pointed means of the capsule seat are provided for tearing the bottom.

According to a further variant, the machine operates with open capsules at both the lid and at the bottom.

According to a yet further variant, the machine operates with capsules provided with opening means which tear the bottom. Therefore, no pointed means of the capsule seat are provided.

According to a further variant, the machine operates to inject the pressurized water from the bottom, either open or suitably pierced by pointed means, and collect the exiting beverage through the lid, which is already pierced or torn by pointed means of the capsule seat or by means of opening means of the capsule itself.

Furthermore, according to a variant of the invention, the recognition means are adapted to detect the magnetic field variation generated by different types of a metal material or different types of aluminum or different types of plastic material.

Furthermore, according to a variant of the invention, the magnetic field is generated in a region other than the capsule seat, and placement or transit of the capsule in said region causes it to be recognized as a function of the change in the magnetic field.

For clarity of presentation, in the description above, expressions such as "capsule made of metal material" or "capsule made of plastic material" have been used, such expressions being understood to mean the prevailing composition of the capsule, it being apparent that a capsule defined as "made of metal material" is actually provided with a lid in polymeric material, e.g. a plastic film, or that a capsule defined as "made of a plastic material" is actually provided with a lid made of a metal material, e.g. an aluminum film.

According to an example of an embodiment of a machine according to the invention, the recognition means comprise a detection sensor comprising a copper winding wound over a plastic support, in which the capsule finds accommodation during dispensing of the beverage. The number of coils wound over the substrate is about 25, for an inductance value between 68uH and 73uH, either with no capsule inserted or with capsule made of diamagnetic/plastic material. A capacitor with a capacitance of 10nF is connected in series to the copper winding. The winding and capacitor together form a resonant LC circuit at a frequency of 250khz. The recognition means further comprise a further electronic circuit consisting of a 250khz sinusoidal signal generator and a threshold voltage comparator. When the aluminum capsule is inserted into the housing, the LC circuit is resonant and returns a 15Vpp amplitude signal; if there is no capsule or if the capsule is made of plastic or diamagnetic material, the LC circuit is not resonant and returns a 10Vpp amplitude signal. The threshold voltage comparator is able to discriminate between the two voltage values, enabling or disabling the beverage dispensing.

It is apparent that a person skilled in the art may make changes to the machine described above, all of which are contained within the scope of protection as defined in the following claims to satisfy contingent needs.

## Claims

1. A system comprising:
- an aluminum capsule (C) containing a product for the preparation of a beverage, by means of infusion or solubilization, such as coffee, tea, or herbal tea, comprising a hollow body for containing the product, made entirely of aluminum;
- a capsule machine (1) for preparing the beverage, comprising a pump, a boiler for heating the amount of water fed by the pump, electronic machine management means for electronically managing the pump and the boiler , and recognition means suitable for generating a magnetic field in a region of the machine, said recognition means comprising electronic detection management means for
a) detecting a change in the magnetic field caused by the aluminum of the body of said capsule located in said region,
b) sending a metal material recognition signal to the electronic machine management means, and for
c) ordering the electronic machine management means to perform a predefined beverage preparation cycle on the basis of the change detected or for inhibiting the performance of any beverage preparation cycle on the basis of the change detected;
wherein the recognition means are adapted to:
- enable the performance of a predefined beverage preparation cycle only in presence of a change in the magnetic field which is characteristic of the capsule (C) made of aluminum; and
- inhibit the performance of any beverage preparation cycle in the presence of a change in the magnetic field which is characteristic of a capsule different from said aluminum capsule (C).

2. The system according to claim 1, wherein said region is a capsule seat for housing the capsule (C).

3. The system according to claim 2, wherein said recognition means comprise a winding (22) of a conductor for generating the magnetic field, said winding (22) being integrated in the capsule seat (20).

4. The system according to claim 3, wherein the capsule seat (20) comprises an annular wall (24) that delimits a seat compartment (26) for accommodating the capsule (C), and wherein the winding (22) surrounds the wall (24) on the outside of the seat compartment (26).

5. A system according to any one of the preceding claims, wherein said recognition means comprise a detection sensor comprising a copper winding and a capacitor, which together form an LC circuit, a sinusoidal signal generator and a threshold voltage comparator.

6. A method for operating a capsule machine of the system according to any one of the preceding claims for preparing a beverage, by infusion or solubilization, such as coffee, tea or herbal tea, comprising the steps of:
a) generating a magnetic field in a region of the machine (1) ;
(b) inserting into the capsule seat (20) a capsule made of aluminum (C) comprising a hollow body for containing the product, made entirely of aluminum;
c) detecting the change in the magnetic field generated by inserting the capsule (C) into the region;
d) sending a metal material recognition signal to the electronic machine management means, and
e) ordering the performance of a predefined beverage preparation cycle only in presence of a change in the magnetic field which is characteristic of the capsule (C) made of aluminum; or inhibiting the performance of any beverage preparation cycle in presence of a change in the magnetic field which is characteristic of a capsule different from said aluminum capsule (C).

## Patentansprüche

1. System, umfassend:
- eine Aluminiumkapsel (C), die ein Produkt zur Zubereitung eines Getränks mittels Aufguss oder Solubilisierung enthält, wie Kaffee, Tee oder Kräutertee, umfassend einen Hohlkörper zum Enthalten des Produkts, der vollständig aus Aluminium besteht;
- eine Kapselmaschine (1) zum Zubereiten des Getränks, umfassend eine Pumpe, einen Boiler zum Erhitzen der von der Pumpe zugeführten Wassermenge, elektronische Maschinenmanagementmittel zum elektronischen Managen der Pumpe und des Boilers, und Erkennungsmittel, die zum Erzeugen eines Magnetfelds in einem Bereich der Maschine geeignet sind, wobei die Erkennungsmittel elektronische Erkennungsmanagementmittel umfassen zum
a) Erkennen einer Änderung des Magnetfelds, das durch das Aluminium des Körpers der Kapsel bewirkt wird, der sich in diesem Bereich befindet,
b) Senden eines Metallmaterialerkennungssignals an die elektronischen Maschinenmanagementmittel, und zum
c) Anweisen der elektronischen Maschinenmanagementmittel, einen vordefinierten Getränkezubereitungszyklus auf Basis der erkannten Änderung durchzuführen oder die Durchführung jeglichen Getränkezubereitungszyklus auf Basis der erkannten Änderung zu verhindern;
wobei die Erkennungsmittel angepasst sind zum:
- Ermöglichen der Durchführung eines vordefinierten Getränkezubereitungszyklus nur bei Vorhandensein einer Änderung des Magnetfelds, das für die aus Aluminium bestehende Kapsel (C) charakteristisch ist; und
- Verhindern der Durchführung jeglichen Getränkezubereitungszyklus bei Vorhandensein einer Änderung des Magnetfelds, das für eine andere Kapsel als die Aluminiumkapsel (C) charakteristisch ist.

2. System nach Anspruch 1, wobei der Bereich ein Kapselsitz zum Aufnehmen bzw. Unterbringen der Kapsel (C) ist.

3. System nach Anspruch 2, wobei die Erkennungsmittel eine Wicklung (22) eines Leiters zur Erzeugung des Magnetfelds umfassen, wobei die Wicklung (22) in den Kapselsitz (20) integriert ist.

4. System nach Anspruch 3, wobei der Kapselsitz (20) eine ringförmige Wand (24) umfasst, die ein Sitzfach (26) zum Aufnehmen bzw. Unterbringen der Kapsel (C) abgrenzt, und wobei die Wicklung (22) die Wand (24) an der Außenseite des Sitzfachs (26) umgibt.

5. System nach einem der vorhergehenden Ansprüche, wobei die Erkennungsmittel einen Erkennungssensor, der eine Kupferwicklung und einen Kondensator umfasst, die zusammen eine LC-Schaltung bilden, einen Sinussignalgenerator und einen Schwellenspannungskomparator umfassen.

6. Verfahren zum Betreiben einer Kapselmaschine des Systems nach einem der vorhergehenden Ansprüche zum Zubereiten eines Getränks durch Aufguss oder Solubilisierung, wie Kaffee, Tee oder Kräutertee, umfassend die Schritte:
a) Erzeugen eines Magnetfelds in einem Bereich der Maschine (1);
b) Einsetzen, in den Kapselsitz (20), einer aus Aluminium bestehenden Kapsel (C), die einen Hohlkörper zum Enthalten des Produkts umfasst, der vollständig aus Aluminium besteht;
c) Erkennen der Änderung des Magnetfelds, das durch Einsetzen der Kapsel (C) in den Bereich erzeugt wird;
d) Senden eines Metallmaterialerkennungssignals an die elektronischen Maschinenmanagementmittel, und
e) Anordnen der Durchführung eines vordefinierten Getränkezubereitungszyklus nur bei Vorhandensein einer Änderung des Magnetfelds, das für die aus Aluminium bestehende Kapsel (C) charakteristisch ist; oder Verhindern der Durchführung jeglichen Getränkezubereitungszyklus bei Vorhandensein einer Änderung des Magnetfelds, die für eine andere Kapsel als die Aluminiumkapsel (C) charakteristisch ist.

## Revendications

1. Système comprenant :
- une capsule (C) en aluminium contenant un produit pour la préparation d'une boisson, au moyen d'une infusion ou d'une solubilisation, telle que du café, du thé ou de la tisane, comprenant un corps creux pour contenir le produit, entièrement en aluminium ;
- une machine à capsules (1) pour la préparation de la boisson, comprenant une pompe, un chauffe-eau pour chauffer la quantité d'eau alimentée par la pompe, des moyens de gestion de machine électroniques pour gérer électroniquement la pompe et le chauffe-eau, et des moyens de reconnaissance convenables pour générer un champ magnétique dans une région de la machine, lesdits moyens de reconnaissance comprenant des moyens de gestion de détection électroniques pour
a) détecter un changement dans le champ magnétique provoqué par l'aluminium du corps de ladite capsule située dans ladite région,
b) envoyer un signal de reconnaissance de matériau métallique aux moyens de gestion de machine électroniques, et pour
c) ordonner aux moyens de gestion de machine électroniques de réaliser un cycle de préparation de boisson prédéfini sur la base du changement détecté ou pour inhiber la réalisation de tout cycle de préparation de boisson sur la base du changement détecté ;
dans lequel les moyens de reconnaissance sont adaptés pour :
- permettre la réalisation d'un cycle de préparation de boisson prédéfini uniquement en présence d'un changement dans le champ magnétique qui est caractéristique de la capsule (C) en aluminium ; et
- inhiber la réalisation de tout cycle de préparation de boisson en présence d'un changement dans le champ magnétique qui est caractéristique d'une capsule différente de ladite capsule (C) en aluminium.

2. Système selon la revendication 1, dans lequel ladite région est un siège de capsule pour loger la capsule (C).

3. Système selon la revendication 2, dans lequel lesdits moyens de reconnaissance comprennent un enroulement (22) d'un conducteur pour générer le champ magnétique, ledit enroulement (22) étant intégré dans le siège de capsule (20).

4. Système selon la revendication 3, dans lequel le siège de capsule (20) comprend une paroi annulaire (24) qui délimite un compartiment de siège (26) pour recevoir la capsule (C), et dans lequel l'enroulement (22) entoure la paroi (24) sur l'extérieur du compartiment de siège (26).

5. Système selon l'une quelconque des revendications précédentes, dans lequel lesdits moyens de reconnaissance comprennent un capteur de détection comprenant un enroulement en cuivre et un condensateur, qui forment conjointement un circuit LC, un générateur de signal sinusoïdal et un comparateur de tension à seuil.

6. Procédé de fonctionnement d'une machine à capsules du système selon l'une quelconque des revendications précédentes pour la préparation d'une boisson, par infusion ou solubilisation, telle que du café, du thé ou de la tisane, comprenant les étapes consistant à :
a) générer un champ magnétique dans une région de la machine (1) ;
b) insérer dans le siège de capsule (20) une capsule (C) en aluminium comprenant un corps creux pour contenir le produit, entièrement en aluminium ;
c) détecter le changement dans le champ magnétique généré par l'insertion de la capsule (C) dans la région ;
d) envoyer un signal de reconnaissance de matériau métallique aux moyens de gestion de machine électroniques, et
e) ordonner la réalisation d'un cycle de préparation de boisson prédéfini uniquement en présence d'un changement dans le champ magnétique qui est caractéristique de la capsule (C) en aluminium ; ou inhiber la réalisation de tout cycle de préparation de boisson en présence d'un changement dans le champ magnétique qui est caractéristique d'une capsule différente de ladite capsule (C) en aluminium.
